**Europäisches Patentamt**

**European Patent Office**

**Office européen des brevets**

(11) Veröffentlichungsnummer: **0 372 533**
**A2**

# (12) EUROPÄISCHE PATENTANMELDUNG

(21) Anmeldenummer: **89122512.0**

(22) Anmeldetag: **06.12.89**

(51) Int. Cl.5: **B23P 15/00, //F16J7/00**

(30) Priorität: **07.12.88 DE 3841205**

(43) Veröffentlichungstag der Anmeldung:
**13.06.90 Patentblatt 90/24**

(84) Benannte Vertragsstaaten:
**AT CH DE ES FR GB IT LI NL SE**

(71) Anmelder: **Feintool International Holding
Industriering 3
CH-3250 Lyss(CH)**

(72) Erfinder: **Haack, Johannes
Hurnimattweg 4
CH-2557 Studen(CH)**

(74) Vertreter: **Weiss, Peter
Schlachthausstrasse 1 Postfach 466
D-7700 Singen a.H.(DE)**

(54) **Verfahren zum Herstellen von Werkstücken aus Metall.**

(57) Bei einem Verfahren zum Herstellen von Werkstücken aus Metall mit profilierten Außen- und/oder Innenkonturen, die beliebige Formkonturen aufweisen und in der Dicke profiliert sind oder sein können, soll das Werkstück (R) konstruktiv in einfache Teilprofile (4, 7, 13, 14) zerlegt werden, die dann durch Feinschneiden hergestellt sowie danach durch Schichten zum fertigen Teil zusammengefügt und miteinander verbunden werden.

Fig.1

EP 0 372 533 A2

## Verfahren zum Herstellen von Werkstücken aus Metall

Die Erfindung betrifft ein Verfahren zum Herstellen von Werkstücken aus Metall mit Außen- und/oder Innenkonturen, die eine beliebige Formkontur aufweisen und in der Dicke profiliert sind oder sein können.

Derartige Werkstücke werden üblicherweise im Gußverfahren oder bei hohen Belastungen als Schmiedeteil mit nachfolgender mechanischer Bearbeitung hergestellt. Beide Verfahren sind teuer, ferner unterliegen Schmiedegesenke wiederum einem hohen Verschleiß. Weiterhin bietet sich auch das spanabhebende Verfahren an, obwohl dies recht teuer ist.

Der Erfinder hat sich zum Ziel gesetzt, ein Verfahren der o. g. Art zu entwickeln, mittels dem oben genannte Werkstücke mit wesentlich geringeren Fertigungskosten und einer höheren Genauigkeit hergestellt werden können.

Zur Lösung dieser Aufgabe führt, daß das Werkstück konstruktiv in einfache Teilprofile zerlegt wird, die dann durch Feinschneiden hergestellt sowie danach durch Schichten zum fertigen Teil zusammengefügt und miteinander verbunden werden.

Das Herstellen von Teilprofilen mittels Feinschneiden hat den wesentlichen Vorteil, daß zum einen beispielsweise Formkosten zum Gießen, Schmiedegesenke zum Schmieden entfallen. Lediglich die Feinschneidwerkzeuge in der Feinschneidpresse kommen zum Einsatz. Dies wiederum ist aber mit den heutigen Fertigungsmethoden leichter, kostengünstiger und vor allem auch exakter herstellbar. Das danach folgende Herstellen der Teilprofile durch Feinschneiden erfolgt wesentlich rascher und deshalb wiederum kostengünstiger. Werden beispielsweise Teilprofile mit unterschiedlicher Dicke gefordert, so kann dies auch bereits bei dem Werkstoffstreifen, aus dem das Profil geschnitten wird, berücksichtigt werden.

Das Verbinden kann erfindungsgemäß durch Löten, Schweißen, Kleben oder mit mechanischen Hilfsmitteln erfolgen. Hier soll allerdings dem Erfindungsgedanken keine Grenze gesetzt sein, da vor allem zukünftige Verbindungsmethoden, wie beispielsweise das Laserschweißen sehr erfolgversprechend sind.

Hervorzuheben ist ferner auch das geringere Gewicht eines so hergestellen Werkstückes, da durch das Feinschneiden insbesondere an Stellen, wo Stärkungen oder Versteifungen nicht notwendig sind, das entsprechende Metall auf einfache Weise entfernt werden kann.

Das vorliegende Verfahren bietet sich vor allem zur Herstellung eines Pleuels an, welches aus einem Schaft besteht, dem einerseits ein Kolbenbolzenauge und andererseits ein Pleuellager angeformt ist. Sowohl Kolbenbolzenauge wie auch Pleuellager sollen von entsprechenden Lagerschalen umfangen sein.

Erfindungsgemäß wird dieses Pleuelteil aus zwei Teilen hergestellt. Einmal wird ein Mittelstreifen feingeschnitten, welcher einerseits ein Loch für das Kolbenbolzenauge und andererseits ein Halbkreis für das Pleuellager besitzt. Dieser Mittelstreifen kann in einem Arbeitsgang durch Feinschneiden hergestellt werden.

Desweiteren wird durch Feinschneiden sowohl ein Pleueloberteil wie auch ein Pleuelunterteil hergestellt mit jeweils einem lochförmigen Ausschnitt für das Kolbenbolzenauge und einem halbkreisförmigen Ausschnitt für das Pleuellager. Auch für die Lagerschalen wird das Feinschneiden als Herstellungsverfahren gewählt. Alle diese Teile werden dann zusammengefügt, wie oben erwähnt, beispielsweise durch Löten, Schweißen, Kleben od. dgl. miteinander verbunden. Ein zweites Pleuelteil zur Bildung eines Auges für das Pleuellager wird in gleicher Weise hergestellt.

In der Praxis hat sich herausgestellt, daß ein derartiges Pleuel einen völlig genügenden Widerstand gegen Verformungskräft, wie beispielsweise Zug- oder Torsionskräfte aufweist.

Die Schichtung der einzelnen Teile kann je nach gefordertem Widerstandsmoment unterschiedlich vorgenommen werden.

Um die Augen zu verbessern, sollten diese nach dem Herstellen der Pleuelteile aufgebohrt werden. Ebenso gilt es, die Verbindungsfläche der Pleuelteile plan zu fräsen.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1 eine Draufsicht auf ein Pleuelteil, hergestellt mittels des erfingungsgemäßen Verfahrens;

Fig. 2 einen Längsschnitt durch das Pleuelteil entlang Linie II-II in Fig. 1;

Fig. 3 einen Querschnitt durch das Pleuelteil entlang Linie III-III in Fig. 1.

Fig. 4 eine Draufsicht auf ein weiteres Pleuelteil, hergestellt mittels des erfindungsgemäßen Verfahrens;

Fig. 5 einen Querschnitt durch das Pleuelteil entlang Linie V-V in Fig. 4;

Fig. 6 eine Stirnansicht auf das Pleuelteil gemäß Fig. 4.

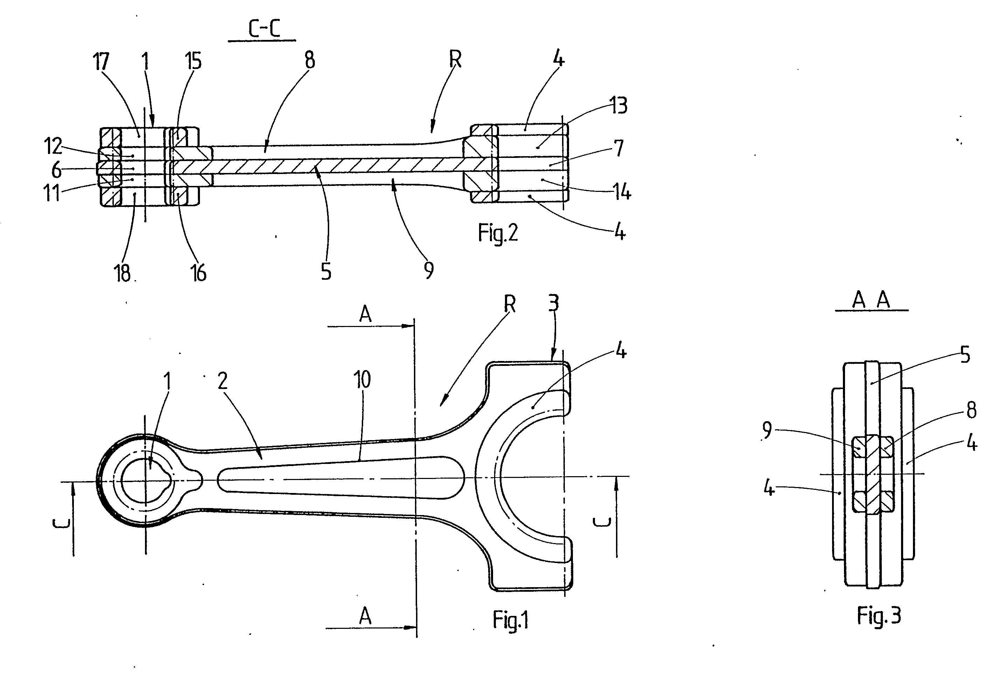

Gemäß Fig. 1 besitzt ein Pleuelteil R ein Kolbenbolzenauge 1, an welches sich ein Schaft 2 anschließt. Gegenüber dem Kolbenbolzenauge 1 ist ein Pleuellager 3 zur Hälfte dargestellt, wobei auch die Hälfte eines Auges angedeutet ist.

Im Längsschnitt gemäß Fig. 2 gesehen besteht das Pleuelteil R aus einem Mittelstreifen 5, der vor allem durchgehend den Schaft 2 bildet. Dieser Mittelstreifen 5 ist aus einem entsprechenden Werkstoffstreifen mittels Feinschneiden herausgeschnitten. Im gleichen oder einem folgenden Arbeitsgang wird aus dem Mittelstreifen 5 ein entsprechendes Loch 6 für das Kolbenbolzenauge 1 und andernends ein Halbkreis 7 für das Pleuellager 3 herausgeschnitten.

Aus einem anderen Werkstoffstreifen erfolgt durch Feinschneiden ein Herstellen eines streifenförmigen Pleueloberteils 8 und eines entsprechenden streifenförmigen Pleuelunterteils 9. Pleueloberteil 8 und Pleuelunterteil 9 können aus einem Werkstoffstreifen mit unterschiedlicher Dicke hergestellt sein.

Sowohl Pleueloberteil 8 wie auch Pleuelunterteil 9 sind im Bereich des Schaftes 2 zum Zwecke der Gewichtsreduzierung mit einem Langloch 10 versehen, wobei diese Form auch aus mehreren runden Löchern bestehen oder aber auch jede beliebige Form aufweisen kann. Diese Löcher sind oder können mit Aufmaß versehen sein, um mechanisch, beispielsweise durch Fräsen oder Aufbohren, auf die Endform gebracht zu werden. Ferner besitzt sowohl Pleueloberteil 8 wie auch Pleuelunterteil 9 einends einen lochförmigen Ausschnitt 11 und 12 für das Kolbenbolzenauge 1 und andernends einen halbkreisförmigen Ausschnitt 13 und 14 für das Pleuellager 3.

Im Bereich des Kolbenbolzenauges 1 sind sowohl Pleueloberteil 8 wie auch Pleuelunterteil 9 jeweils mit einer Lagerschale 15 bzw. 16 für einen nicht gezeigten Kolbenbolzen belegt, wobei auch diese Lagerschalen 15 und 16 durch Feinschneiden hergestellt sind. Sie besitzen jeweils wieder eine entsprechende feingeschnittene Öffnung 17 und 18 zur Erzeugung des Kolbenbolzenauges 1.

Andererseits belegen Lagerschalen 4 sowohl das Pleueloberteil 8 wie auch das Pleuelunterteil 9.

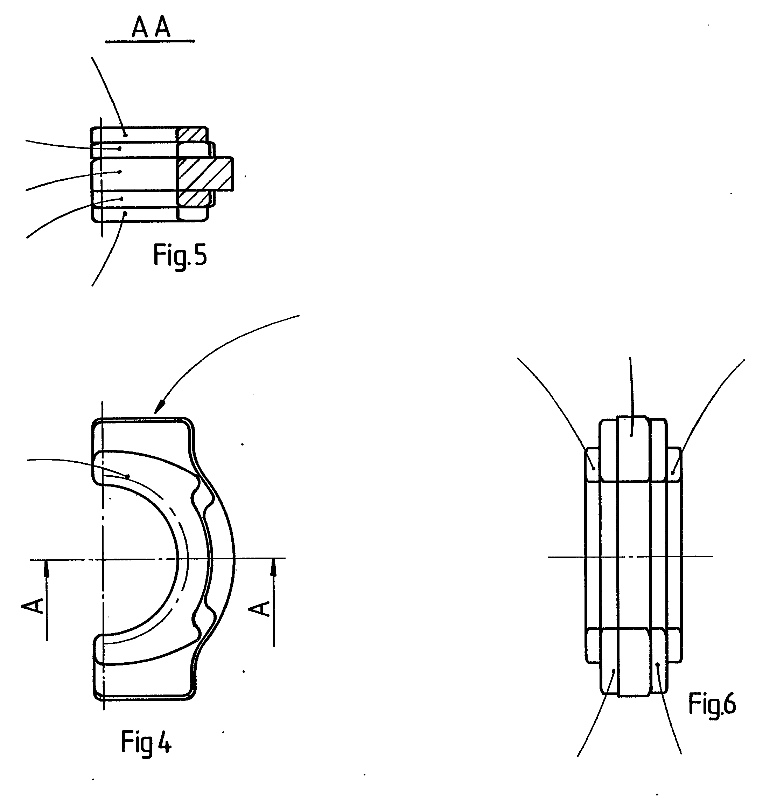

In Fig. 4 ist ein weiteres Pleuelteil R1 zur Bildung eines Auges zusammen mit dem Pleuelteil R gezeigt, wobei dieses Auge beispielsweise in Gebrauchslage eine entsprechende Nockenwelle umfangen kann. Dementsprechend ist das Pleuelteil R1 ähnlich aufgebaut, wie das Pleuellager 3. Es besteht aus einem halbschalenförmigen Mittelstreifen 19, auf den jeweils beidseits ebenfalls halbschalenförmige Ausschnitte 20 und 21 sowie Lagerschalen 22 und 23 aufgelegt sind. Auch diese Teile sind einzeln im Feinschneidverfahren hergestellt.

Hergestellt wird das gesamte Pleuelteil R, indem Pleueloberteil und Pleuelunterteil auf den Mittelstreifen 5 aufgelegt und mit diesem verbunden werden. Das Verbinden kann durch Löten oder Schweißen erfolgen, gedacht ist auch an Laserschweißen. Selbstverständlich kann die Verbindung auch durch einen geeigneten Klebstoff bewirkt werden. Hier soll dem Erfindungsgedanken keine Grenze gesetzt sein. Bei einer Lötverbindung mit Cu-Hartlot kann aus der Löttemperatur gleich anschließend der Vergütungsarbeitsgang ohne zusätzliche Erwärmung erfolgen.

Des weiteren werden dann die Lagerschalen 15 und 16 sowie 4 um das Kolbenbolzenauge 1 bzw. das Pleuellager 3 angeordnet und gleichfalls durch Löten oder Schweißen mit dem Pleueloberteil 8 bzw. Pleuelunterteil 9 verbunden. Im übrigen ist die Schichtung der einzelnen Teile auch anders denkbar.

In gleicher Weise wird auch das Pleuelteil R1 hergestellt.

In einem weiteren Arbeitsgang erfolgt ein Abfräsen der Pleuelteile R und R1 entlang den strichpunktierten Linien 24 und 25 in Fig. 1 und Fig. 4. Hierdurch werden die beim Feinschneiden gebildeten abgerundeten Kanten beseitigt, so daß ein Aufsetzen und Verbinden des Pleuelteils R1 auf das Pleuelteil R verbessert bzw. überhaupt ermöglicht wird. In Gebrauchslage wird dieses Pleuelteil R1 mit dem Pleuelteil R verbunden, was beispielsweise durch Schweißen oder entsprechende Verbindungselemente geschieht.

Ferner werden die einzelnen Augen aufgebohrt, was durch die Kreislinien 25, 26 und 27 in den Figuren 1 und 4 angedeutet ist.

## Ansprüche

1. Verfahren zum Herstellen von Werkstücken aus Metall mit profilierten Außen- und/oder Innenkonturen, die beliebige Formkontur aufweisen und in der Dicke profiliert sind oder sein können, dadurch gekennzeichnet, daß das Werkstück konstruktiv in einfache Teilprofile zerlegt wird, die dann durch Feinschneiden hergestellt sowie danach durch Schichten zum fertigen Teil zusammengefügt und miteinander verbunden werden.

2. Verfahren nach Anspruch 1, dadurch gekennzeichnet, daß das Verbinden durch Löten beispielsweise mit AgCu-, Cu-, ZnCu-Lot erfolgt.

3. Verfahren nach Anspruch 1, dadurch gekennzeichnet, daß das Verbinden durch Schweißen, beispielsweise auch Laserschweißen erfolgt.

4. Verfahren nach Anspruch 1, dadurch gekennzeichnet, daß das Verbinden durch Kleben erfolgt.

5. Verfahren nach Anspruch 1, dadurch gekennzeichnet, daß das Verbinden durch mechanische Hilfsmittel, wie beispielsweise Schraubenbolzen, Nieten (Fremdniete oder am Einzelteil durch Fließpressen geformte Niete) od. dgl. erfolgt.

6. Verfahren zum Herstellen eines Pleuels mit Kolbenbolzenaugen und Pleuellager sowie Schaft und Lagerschalen, dadurch gekennzeichnet, daß zumindest ein Pleuelteil aus einem Mittelstreifen mit Loch für das Kolbenbolzenauge und einem Halbkreis für das Pleuellager, gegebenenfalls ein Pleueloberteil und ein Pleuelunterteil mit jeweils einem lochförmigen Ausschnitt für das Kolbenbolzenauge und einen halbkreisförmigen Ausschnitt für das Pleuellager und jeweils zwei Lagerschalen für das Kolbenbolzenauge und zwei Lagerschalen für das Pleuellager durch Feinschneiden hergestellt und durch Löten, Schweißen, Kleben od. dgl. miteinander verbunden werden.

7. Verfahren nach Anspruch 6, dadurch gekennzeichnet, daß ein zweites Pleuelteil aus einem halbschalenförmigen Mittelstreifen, ggfs. zwei halbschalenförmigen Ausschnitten sowie Lagerschalen besteht, wobei diese Teile durch Feinschneiden hergestellt und durch Löten, Schweißen, Kleben od. dgl. miteinander verbunden werden.

8. Verfahren nach Anspruch 7, dadurch gekennzeichnet, daß Verbindungsflächen zwischen den beiden Pleuelteilen abgefräst werden.

9. Verfahren nach einem der Ansprüche 6 bis 8, dadurch gekennzeichnet, daß nach dem Herstellen der einzelnen Pleuelteile die Augen für Kolbenbolzen und das Pleuellager aufgebohrt werden.

Fig.3

Fig.2

Fig.1

Fig.6

Fig.5

A A

Fig.4

A

A